# EUROPEAN PATENT APPLICATION

(11) **EP 2 308 763 A1**
(43) Date of publication of application: **13.04.2011**
(21) Application number: 10187164.8
(22) Date of filing: 11.10.2010
(51) Int. Cl.: B65D 19/18

(54) **Collapsible bin**

(30) Priority: 09.10.2009 US 250490 P; 16.12.2009 US 286837 P
(71) Applicant: Rehrig Pacific Company, Los Angeles, CA 90058 (US)
(72) Inventor: Baltz, Kyle L., Redondo Beach CA 90278 (US); Cavalcante, Mauricio D., Atlanta GA 30319 (US)
(74) Representative: Leckey, David Herbert

(57) **Abstract**

The present invention provides a reusable, washable, plastic, collapsible bin. The bin includes a base And a first and second pair of walls extending upwardly from the base having interlocking members for interlocking the first and second pair of walls to one another.

## Description

This application claims priority to U.S. Provisional Application Serial Nos. 61/250,490 filed October 9, 2009 and 61/286,837 filed December 16, 2009.

### BACKGROUND OF THE INVENTION

The present invention relates generally to collapsible bins, and in particular a collapsible bin that is particularly useful for bulk meat processing.

In meat processing plants, product is sometimes temporarily stored in large cardboard boxes with plastic liners. Sometimes, the cardboard bows or fails under the weight of the meat. After use, the boxes and liners are discarded.

### SUMMARY OF THE INVENTION

The present invention provides a reusable, washable, plastic, collapsible bin. The bin includes a base and a first and second pair of walls extending upwardly from the base having interlocking members for interlocking the first and second pair of walls to one another.

These and other features of the application can be best understood from the following specification and drawings, the following of which is a brief description.

### BRIEF DESCRIPTION OF THE DRAWINGS

Figure 1 is a perspective view of one embodiment of a bin according to the present invention.
Figure 2 is a perspective view of a quarter of the base of Figure 1 (the rest of the base being symmetric).
Figure 3 is a perspective view of an engagement slot of the base for the end wall of Figure 1.
Figure 4 is a perspective view of an engagement hook of the base for the side wall of Figure 1.
Figure 5 is an interior view of half of the end wall of Figure 1 (the other half being symmetric).
Figure 6 is an exterior view of the half of the end wall of Figure 5.
Figure 7 is an enlarged interior view of the top corner of the end wall of Figure 5.
Figure 8 is an enlarged view of the bottom of the end wall of Figure 5.
Figure 9 is an enlarged view of the interlocking members of the end wall of Figure 5.
Figure 10 is an enlarged view of the interlocking members of the end wall of Figure 5.
Figure 11 is an interior view of half of the side wall (the other half being symmetric).
Figure 12 is an exterior view of half of the side wall of Figure 11.
Figure 13 is an enlarged view of the lower end of half of the side wall of Figure 11.
Figure 14 is a perspective view of a quarter of the base and half of the end wall of Figure 1 in a slightly angled position in a first step in assembling the end wall to the base.
Figure 15 is a side view of the base and end wall of Figure 14 in an upright, assembled position.
Figure 16 is an enlarged section view of the interaction of the end wall and base of Figure 15.
Figure 17 is a perspective view of the bin of Figure 1, partially broken away, with one of the side walls collapsed.
Figure 18 is a side view of the bin of Figure 17.
Figure 19 is a perspective view of a quarter of the bin of Figure 1 (the remaining quarters being symmetric).
Figure 20 is an enlarged view of one of the corners of the bin of Figure 1, partially broken away.
Figure 21 is a vertical section view of the connection of the end wall and side wall of Figure 1.
Figure 22 is an enlarged upper perspective view of a horizontal section of the end wall and side wall.
Figure 23 is a perspective view of the bin of Figure 1 in a collapsed position.
Figure 24 is a section view taken along line A-A of Figure 23.
Figure 25 is a section taken along line B-B of Figure 23.
Figure 26 is an enlarged view of a portion of Figure 25.
Figure 27 is an enlarged interior view of a second embodiment of the end wall.
Figure 28 is an interior view of half of the end wall of Figure 27 (the other half being symmetric).
Figure 29 is an exterior view of half of the second embodiment of the end wall.
Figure 30 is an enlarged exterior view of the second embodiment of the end wall of Figure 29.
Figure 31 is an enlarged exterior view of the cavities of the end wall, partially broken away.

### DETAILED DESCRIPTION OF THE PREFERRED EMBODIMENT

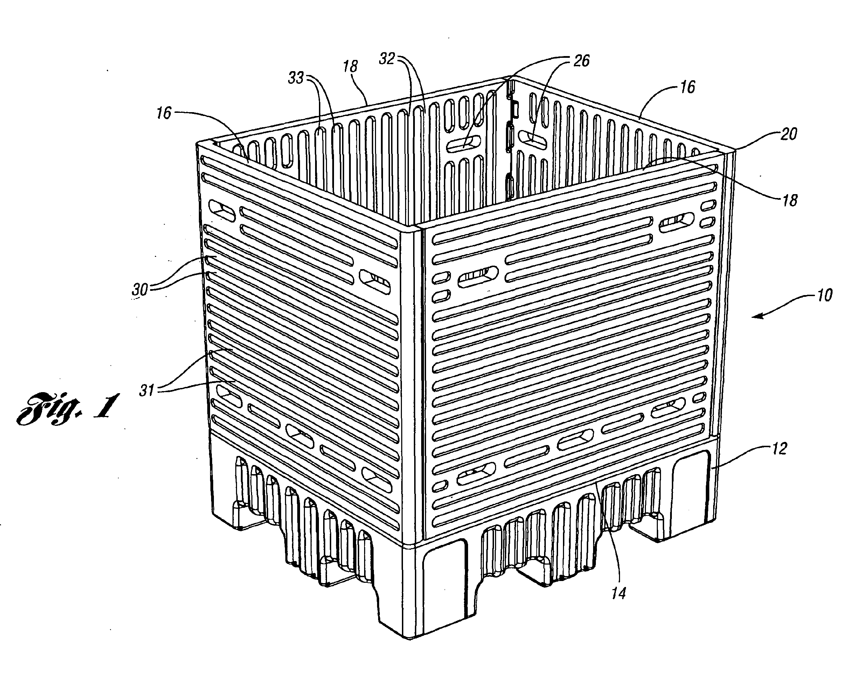

A bin 10 according to a first embodiment of the present invention is shown in Figure 1. The bin 10 includes a plastic base 12 having integral supports 14 extending downwardly. A pair of end walls 16 extend upwardly from the base 12 along end edges of the base 12 and include wall interlocking members 20 protruding from side edges of the end walls 16. Side walls 18 extend upwardly from side edges of the base 12 and include wall interlocking members 20 protruding from side edges of the side walls 18. The interlocking members 20 of the side walls 18 interlock with the interlocking members 20 of the end walls 16 to hold the end walls 16 and side walls 18 together, particularly against outward forces on the walls when the bin 10 is loaded.

The end walls 16 and side walls 18 are each separately roto-molded of a plastic material, such as HDPE. Each of the end walls 16 and side walls 18 includes a plurality of horizontal hollow ribs 30 alternating with channels 31 along an exterior thereof and a plurality of alternating vertical hollow ribs 32 alternating with vertical channels 33 along an interior thereof. Each of the end walls 16 and side walls 18 further includes a plurality of handles 26 molded therethrough.

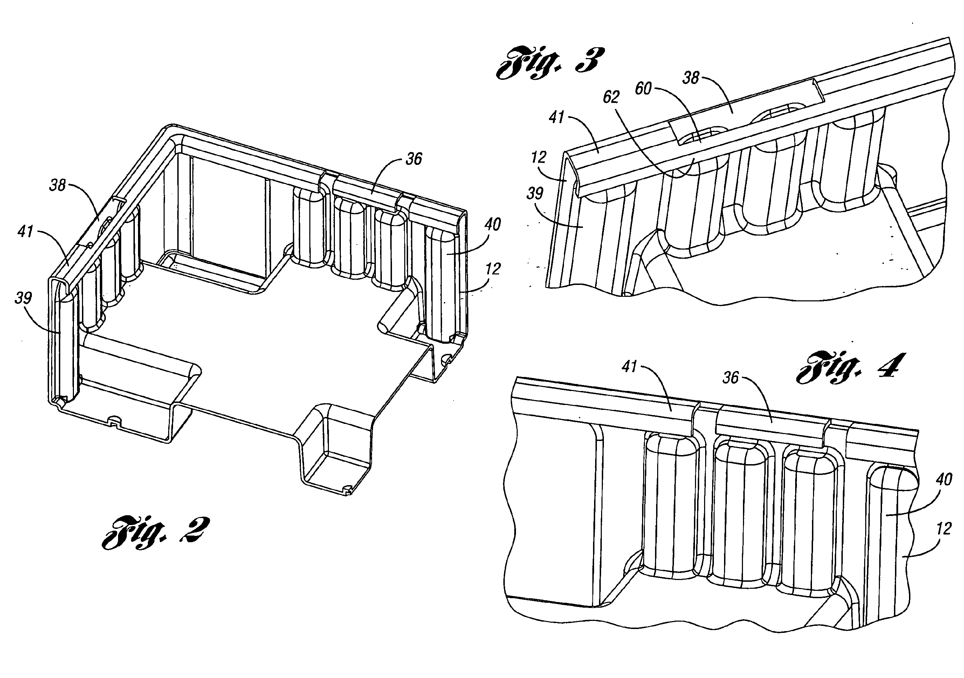

Figures 2-4 illustrate base slot 38 and hooks 36 that are used to attach the end walls 16 and side walls 18 respectively. The base 12 includes base end walls 39 and base side walls 40 defining a base interior. An interior lip 41 protrudes inwardly from the inner periphery of the base end walls 39 and base side walls 40. A plurality (in this example, two) of base slots 38 are formed through the interior lip 41 along each of the base end walls 39. The base slot 38 is an opening through the interior lip 41. The interior lip 41 includes a downwardly curved portion 60 and a downwardly-extending portion 62 inward of the base slot 38. A plurality (in this example, two) of hooks 36 are formed as part of the interior lip 41 along the base side walls 40 (by forming cutouts through the interior lip 41 on either side of the hooks 36). The hooks 36 of the base 12 are formed by cutting away adjacent portions of the interior lip 41 and leaving a horizontal portion, a downwardly curved portion, and a downwardly extending portion of the lip 41 to form the hook 36.

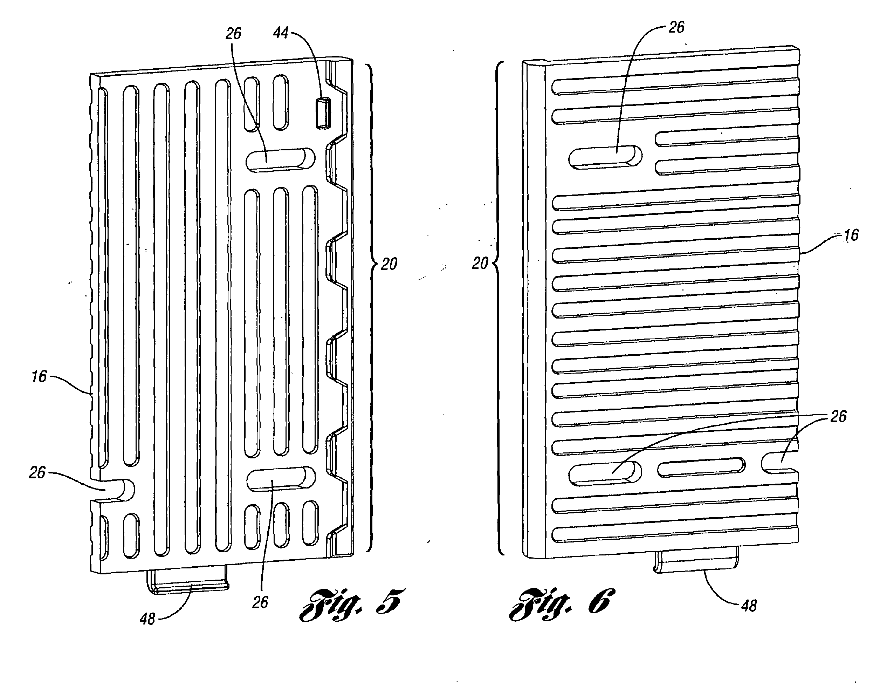

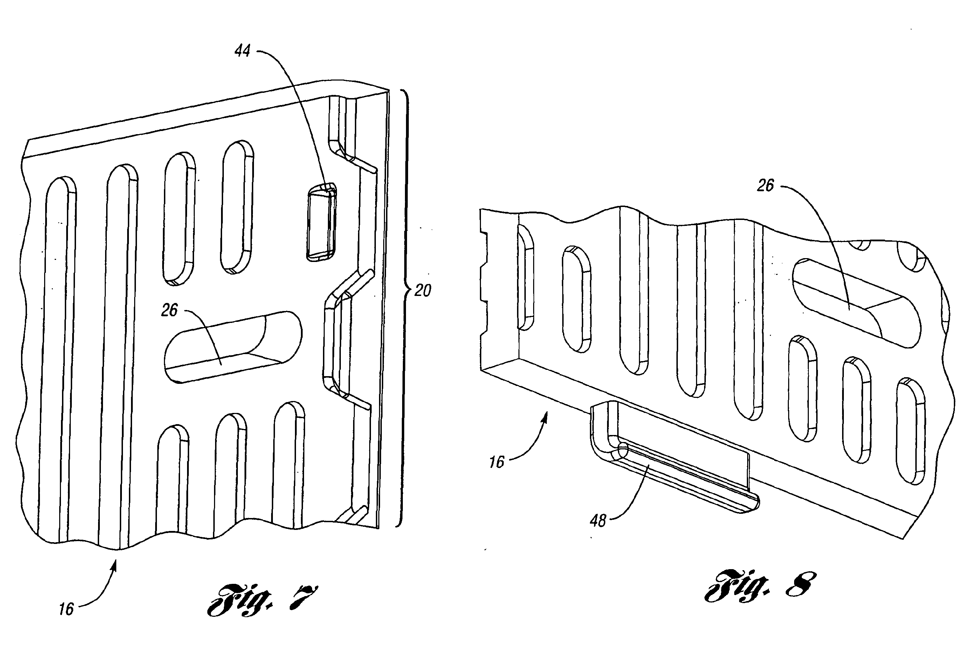

Figure 5 shows an interior view of half of the end wall 16 and Figure 6 shows an exterior view of the half of the end wall 16. Figure 7 shows more detail as to the wall interlocking members 20 used to interact with the side walls 18, the handles 26 which are built into the end walls 16, and the side wall protrusion 44. Figure 7 shows the top corner of an end wall 16, giving greater detail to the protrusion 44 which is used to lock the walls together. During assembly, the side walls 18 will be moved to an upright position past the protrusion 44. When combined with the wall interlocking members 20 which interact with each other on each of the walls 16, 18, the walls are locked into place. Figure 8 shows an enlarged view of the hook element 48 of the end walls 16.

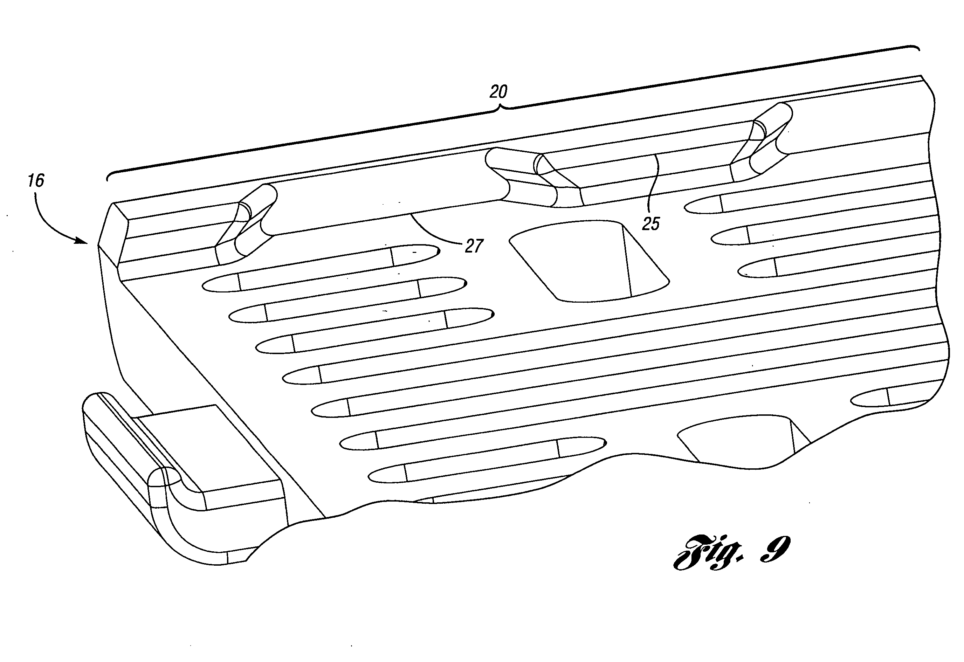

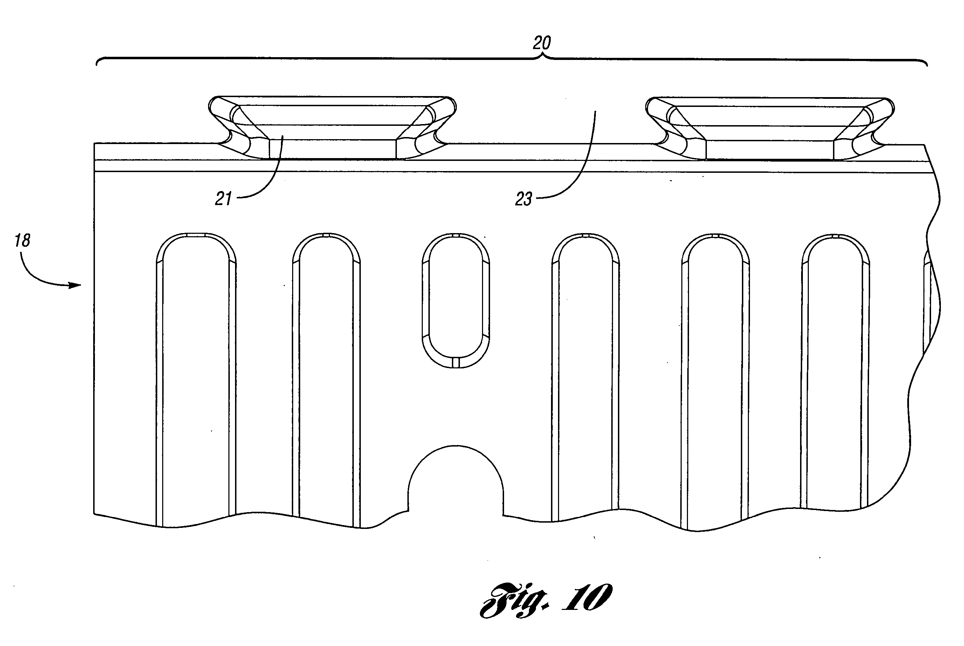

Figure 9 is an enlarged view of the end wall 16 wall interlocking members 20, which are used to interact with the wall interlocking members 20 on the side walls 18 in Figure 10 to keep the walls in place and allow them to remain connected. The interlocking members 20 include side wall teeth 25 separated by recesses 27 and end wall teeth 21 separated by recesses 23 (Figure 10). The side wall teeth 25 and the end wall teeth 21 are dovetailed and have undercuts.

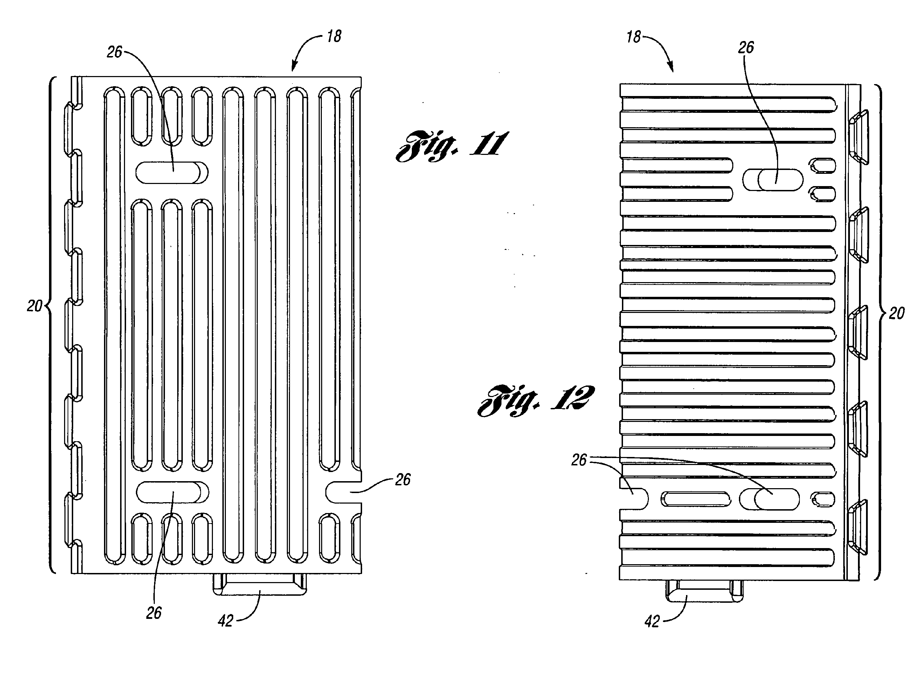

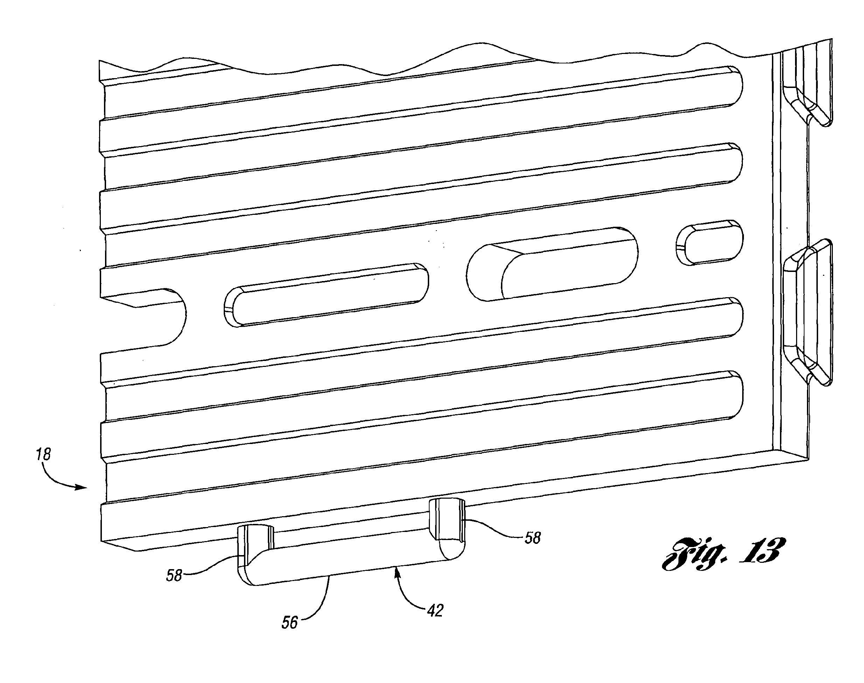

Figure 11 shows an interior view of the side wall 18 and Figure 12 shows an exterior view of the side wall 18. Both figures show more detail as to the wall interlocking members 20, the handles 26 which are integrated into the side walls 18, as well as the hinge element 42 at the bottom of the side wall 18. Figure 13 shows an enlarged view of the hinge element 42 of the side walls 18. The hinge element 42 includes a hinge pin 56 spaced away from the bottom edge of the side wall 18 by arms 58.

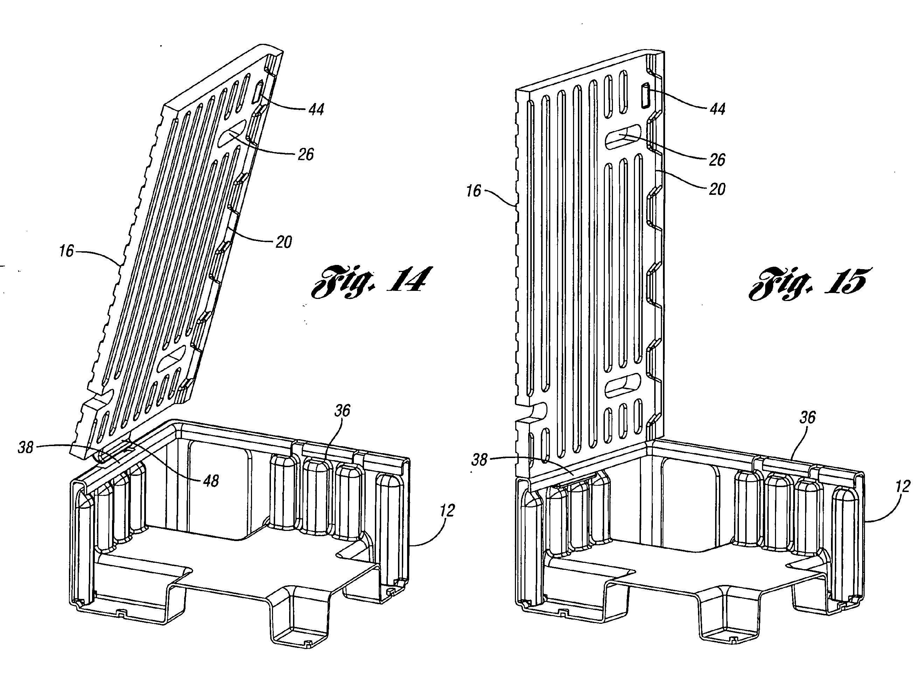

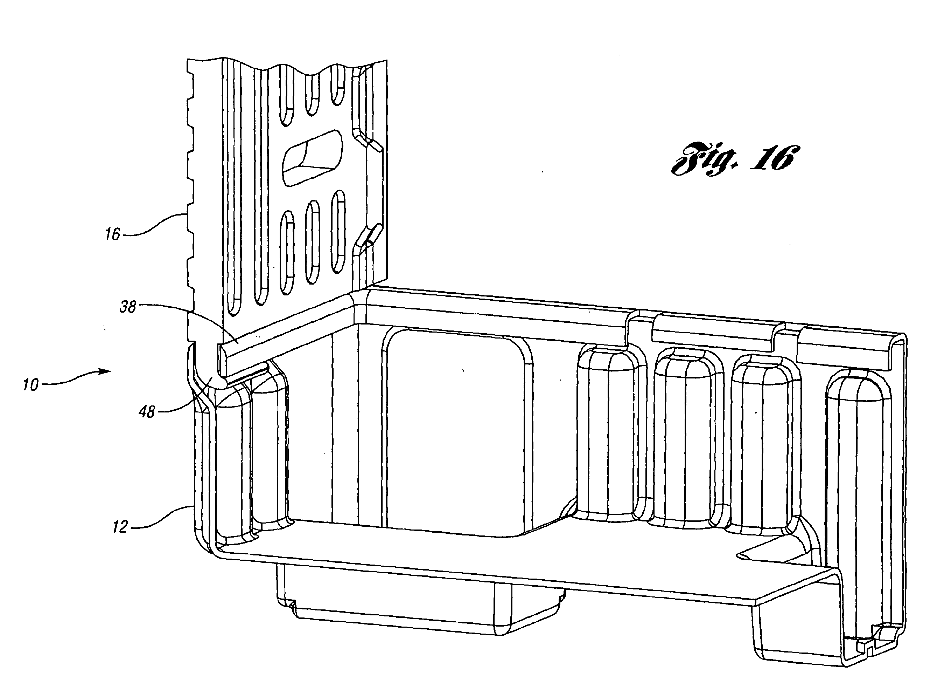

Figures 14-15 show an end wall 16 being attached to the base 12. The end wall 16 is angled slightly to place the hook element 48 into the base slot 38. As seen in Figure 15, the end wall 16 is then rotated into an upright position to lock the wall 16 into place. The hook element 48 interlocks and rotates in the base slot 38 thus "hooking" the base slot 38 and locking the end wall 16 to the base 12. (Figure 16).

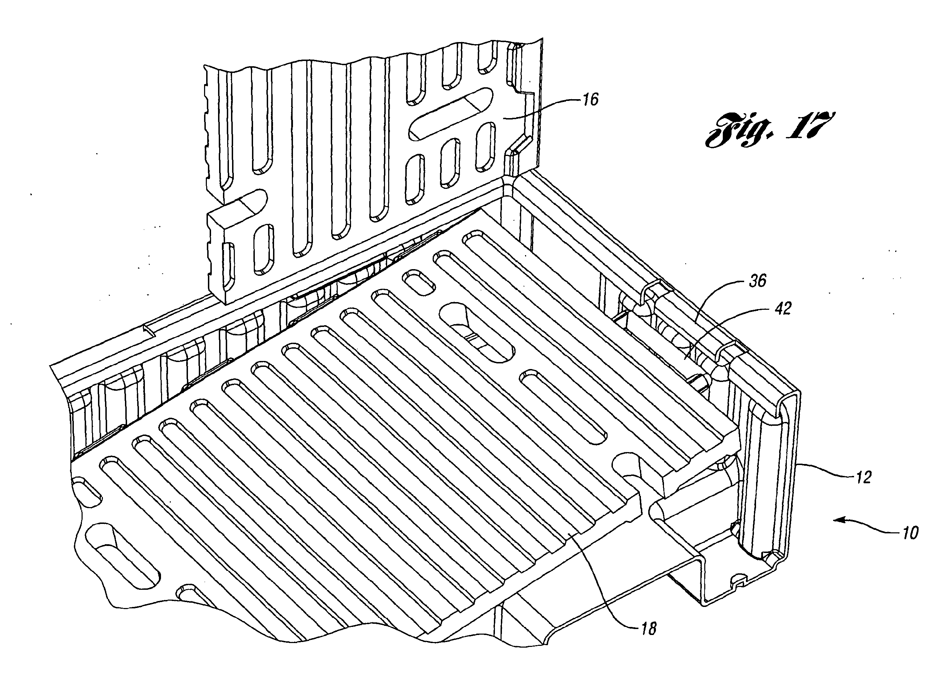

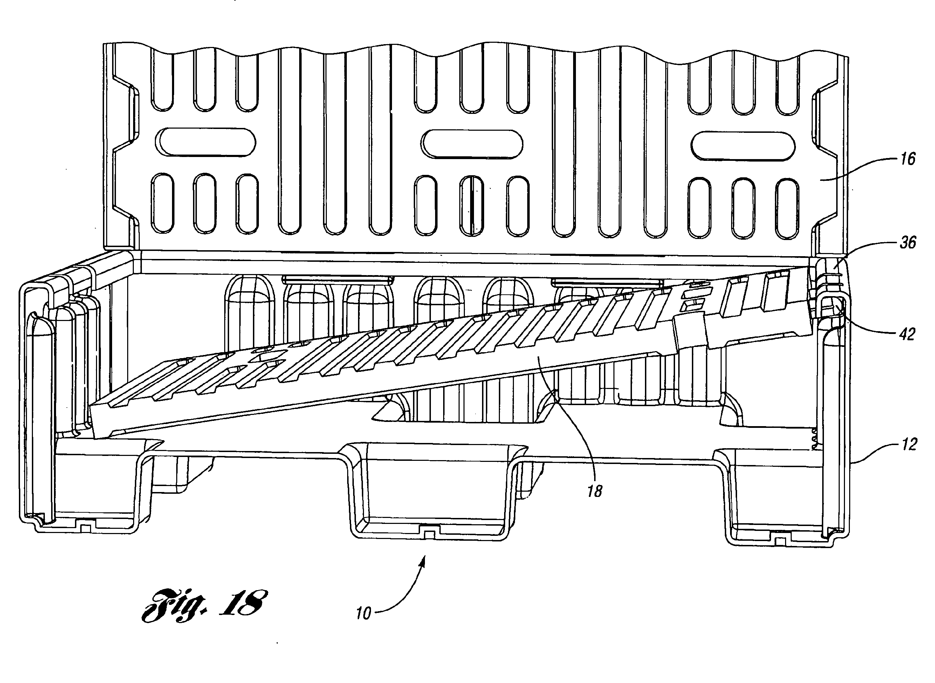

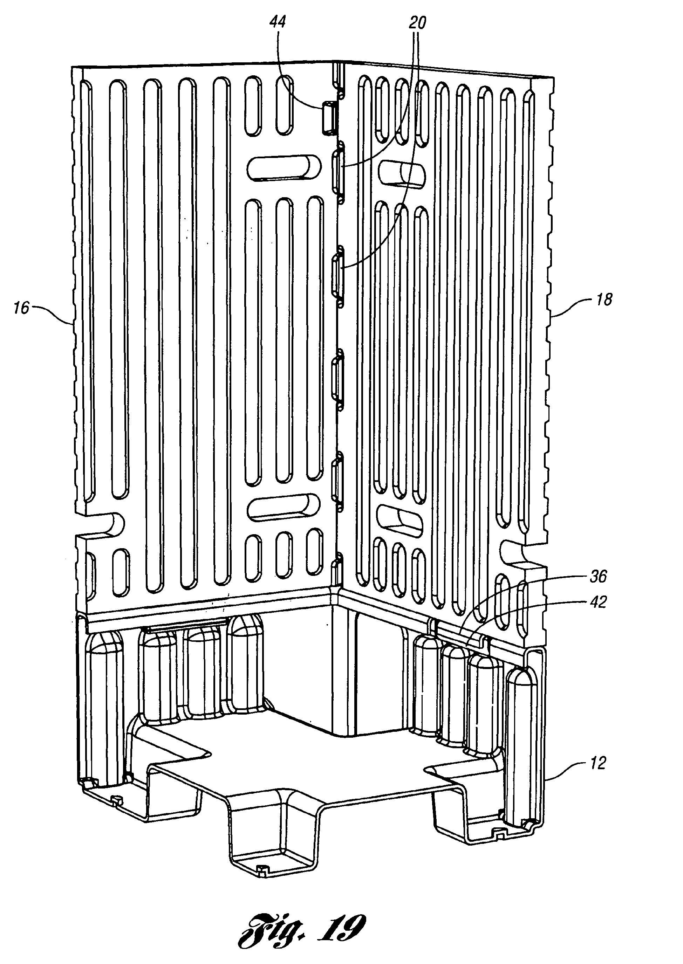

Figures 17-19 show how a side wall 18 is attached to the base 12 and moved into position to create the bin 10. During assembly, the side walls 18 are assembled after the end walls 16. As seen in Figures 17 and 18, the hinge element 42 of the side wall 18 is initially lifted onto a ledge formed by corrugations in the base 12. The hinge element 42 is aligned with the hooks 36 by lifting the bottom edge of the side wall 18. The side wall 18 interacts with hooks 36 in the base 12 in order to attach the side wall 18 to the base 12. The hinge element 42 connected to the side wall 18 is then snapped into position, connecting the side wall 18 to the base 12. (Figure 18). The hinge element 42 and hooks 36 interact such that the side wall 18 is able to be pivoted to the upright position. As seen in Figure 19, the side wall 18 then rotates into an upright position, snapping past side wall protrusions 44 which help to keep the walls together. The wall interlocking members 20 on the end walls 16 interlock with the interlocking members 20 on the side wall 18.

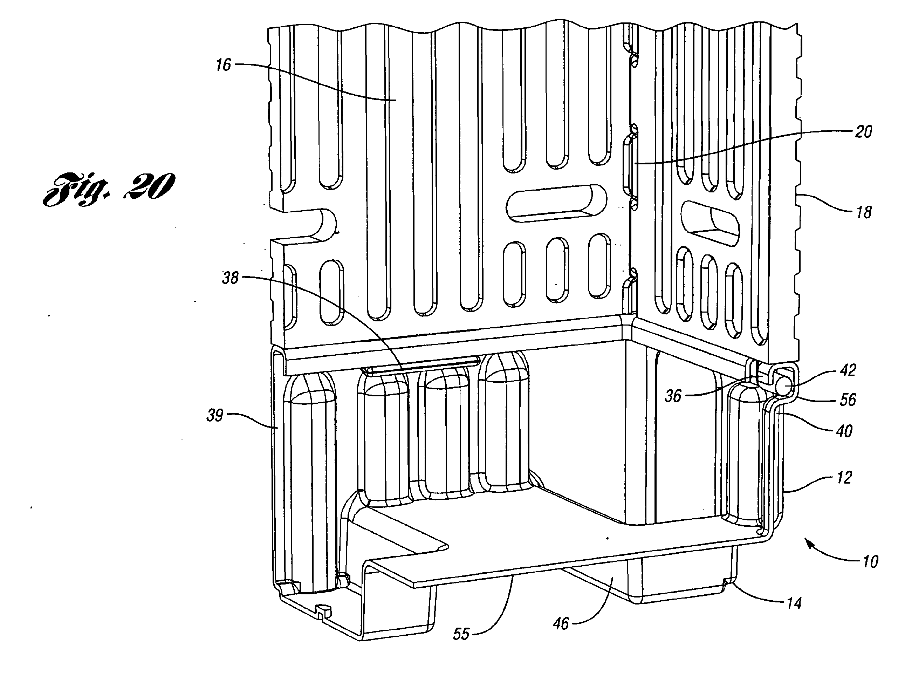

Figure 20 is an enlarged view of the corner of the bin 10 after the side wall 18 has been moved and locked into an upright position. Figure 20 illustrates the locking between the side walls 18 and the base 12 as well as the side walls 18 and the end walls 16. When the side wall 18 is subsequently collapsed, the side wall 18 is pushed inward, past the side wall protrusions 44 (Figure 19). After the side wall 18 has rotated sufficiently, the hinge elements 42 will be released from the hooks 36 and the side wall 18 will fall into the interior of the base 12. Thus, the side walls 18 can be collapsed, detached, and stacked in the base 12 in a single motion.

Figure 20 also shows the base 12 includes a plurality of fork-receiving channels 46 defined between the supports 14. The base 12 is preferably roto-molded of a plastic material, such as HDPE. After roto-molding, an upper panel (not shown) extending horizontally across the top of the base is cut away and removed from the base. This leaves a base 12 with an interior compartment defined by the base end walls 39 and base side walls 40 about the perimeter of the base 12 and a base wall 55 that is shaped to define the channels 46. The base 12 could be water-tight, as would be formed by roto-molding, or could have drainage holes drilled or otherwise formed after molding.

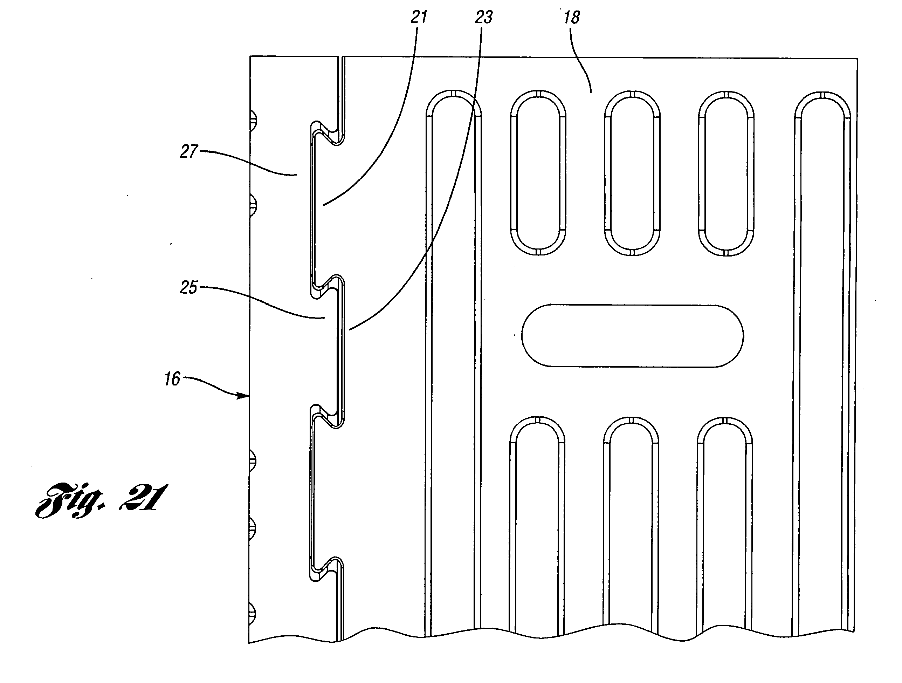

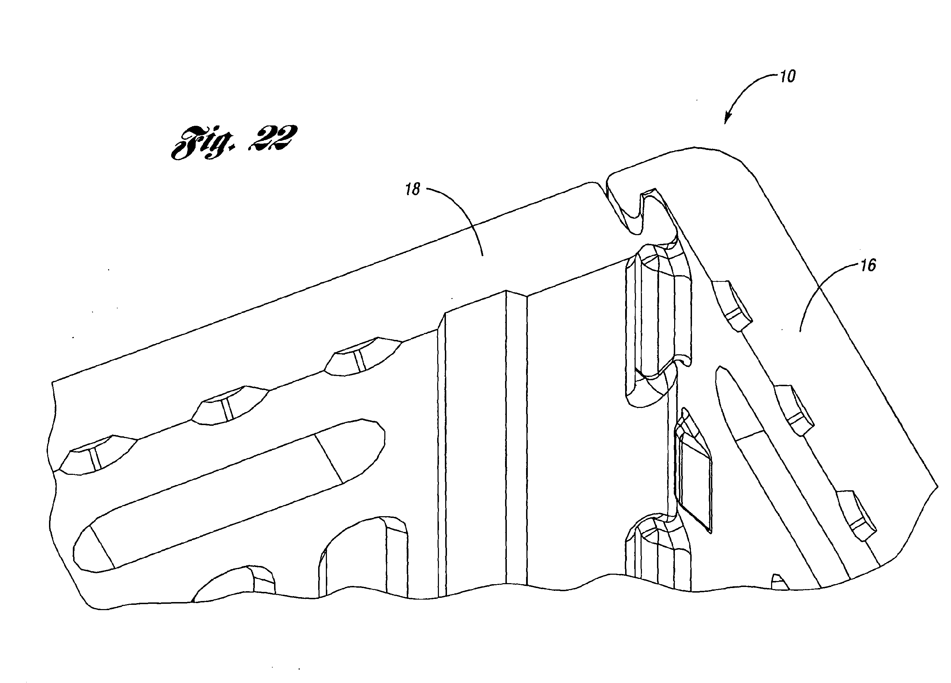

Referring to Figures 21 and 22, the side wall teeth 25 and the end wall teeth 21 are dovetailed to interlock with one another and have undercuts to further interlock with one another. When the walls 16, 18 are moved into an upright locked position, the side wall teeth 25 will line up with and move into the end wall recesses 23. At the same time, the end wall teeth 21 will line up with and move into the side wall recesses 27. This allows the walls 16, 18 to remain in a constant position, providing extra stability and interlocking the walls to keep them upright.

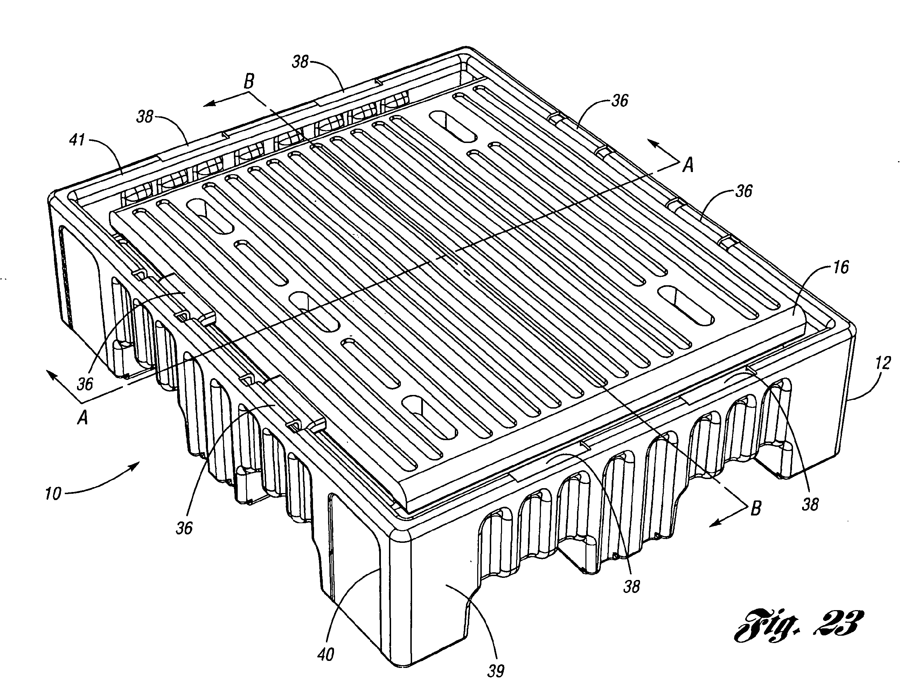

Figure 23 is a perspective view of the bin 10 in a collapsed position. The end walls 16 and side walls 18 are detachable and stackable within the base 12. The end walls 16 and side walls 18 are all collapsible such that each end wall 16 and side wall 18 is capable of lying inside the base 12. For example, the disassembled bin 10 can be shipped as shown in Figure 23 to a warehouse or plant for assembly and use, disassembled for cleaning and reassembled for reuse.

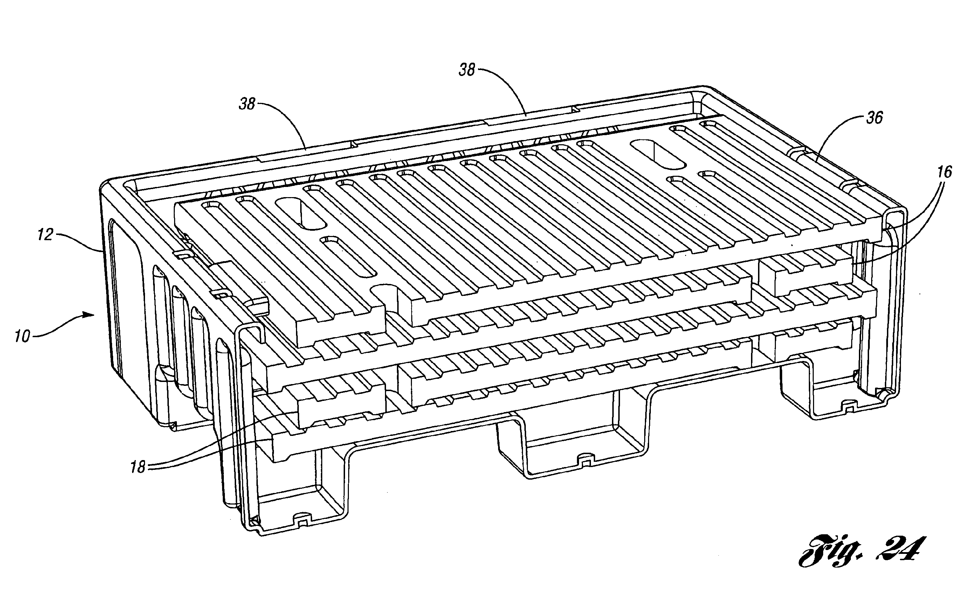

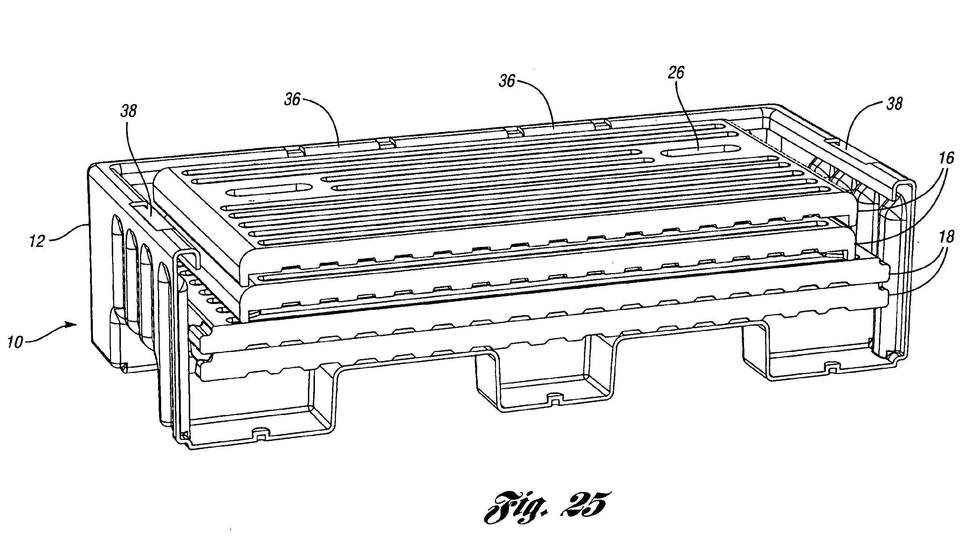

Figures 24 and 25 are section views of the collapsed bin 10 of Figure 23 taken along lines A-A and B-B, respectively, where both side walls 18 are folded down followed by both end walls 16. The side walls 18 and end walls 16 are detached from the base 12 before being collapsed and laid into the base.

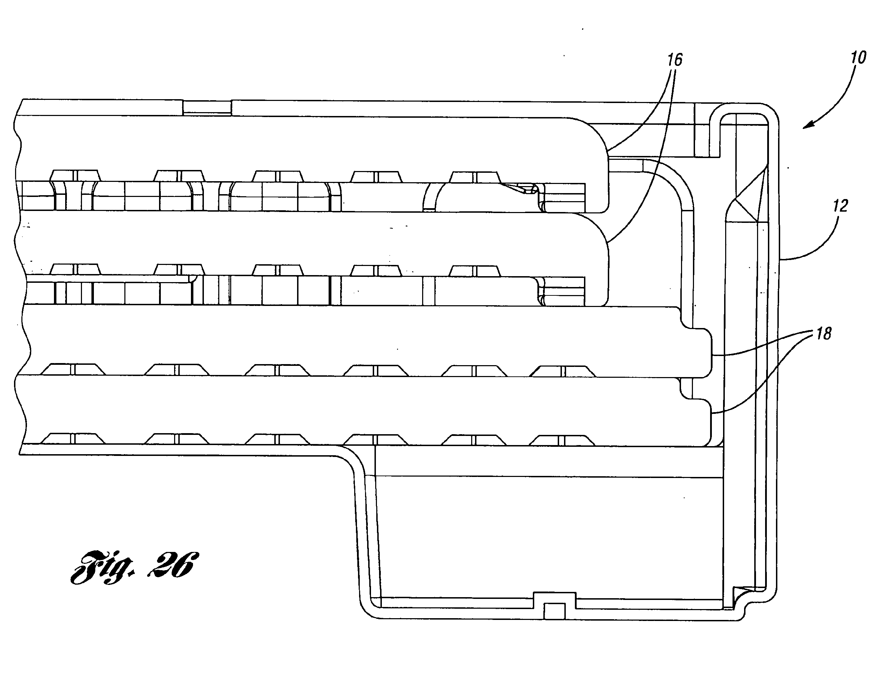

Figure 26 is an enlarged view of a portion of the bin 10 of Figure 25. Figure 26 illustrates the how the end walls 16 and side walls 18 are stacked in the base 12 in the preferred embodiment.

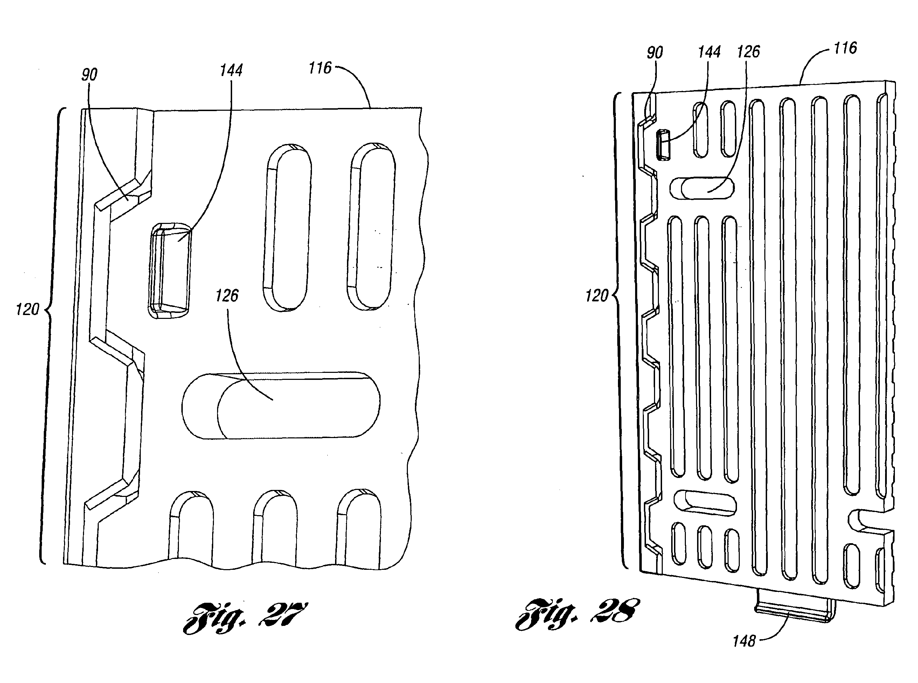

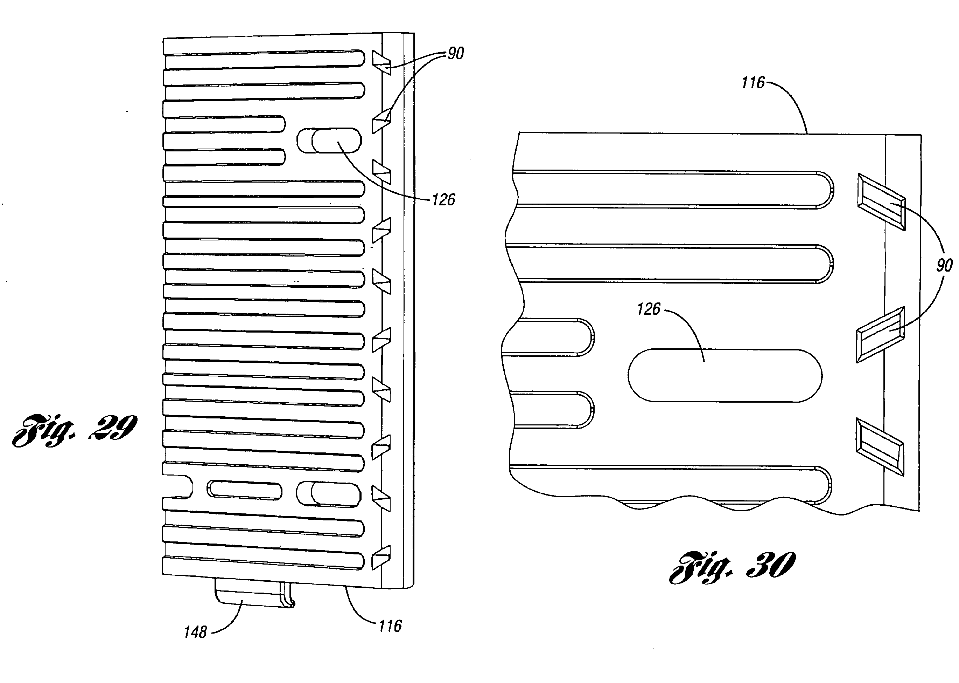

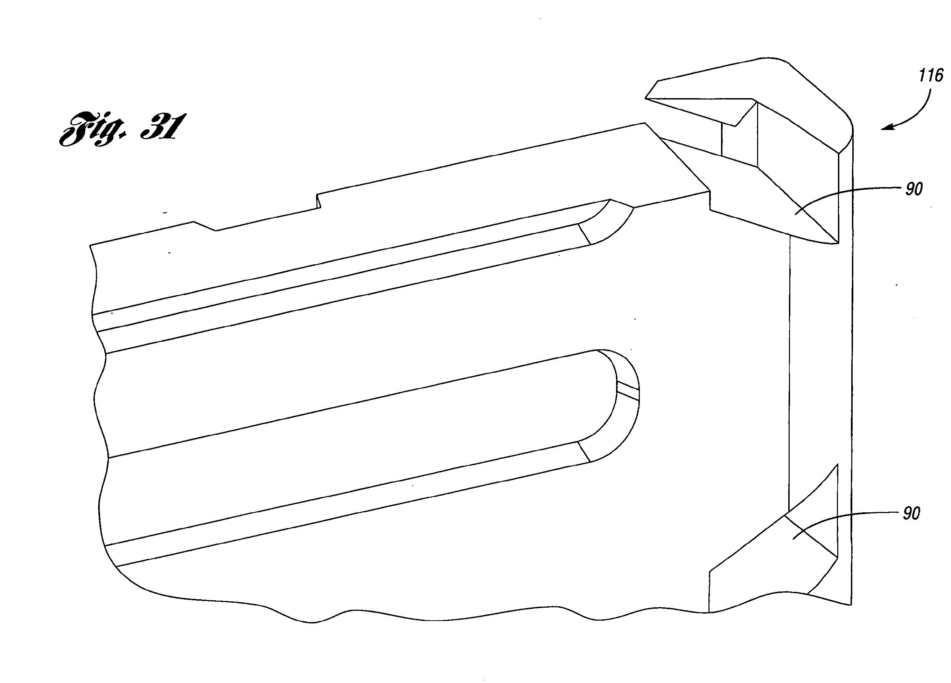

Figures 27-31 show an alternative embodiment of an end wall 116 that could be used in the bin 10 of Figures 1-26. On end wall 116, the interlocking members 120 are formed differently. Figures 27 and 28 show an interior view of the end wall 116 while Figures 30 and 31 show an exterior view of the end wall 116. In this embodiment, a number of cavities 90 are on the exterior side of undercut portions of the interlocking members 120 of the end wall 116. These cavities 90 are initially formed by slides (not pictured) which are inserted prior to roto-molding. The slides allow for easier roto-molding of the necessary geometric shapes. Once roto-molding of the end wall 116 is complete, the slides are removed, leaving the cavities 90. This design eliminates the necessity for complex tooling assemblies to create the undercuts. Another benefit of the cavities 90 that are left following the roto-molding is that it makes the end wall 16 easier to clean, as high-pressure water can be sprayed into the cavities 90 to clean out any undercuts. Figure 31 shows a close up view of the exterior of the end wall 16 specifically showing the cavities 90 that remain from the removed slides (not shown).

In accordance with the provisions of the patent statutes and jurisprudence, exemplary configurations described above are considered to represent a preferred embodiment of the invention. However, it should be noted that the invention can be practiced otherwise than as specifically illustrated and described without departing from its spirit or scope.

## Claims

1. A bin comprising:
a base;
a first pair of walls having wall interlocking members; and
a second pair of walls having wall interlocking members, wherein the first and second pair of walls interlock with the base and the wall interlocking members on the first and second pair of walls include a plurality of teeth to interlock the first and second pair of walls with one another.

2. The bin of claim 1 wherein the plurality of teeth on the first pair of walls correspond to a plurality of recesses on the second pair of walls.

3. The bin of claim 2 wherein the plurality of teeth on the first and second pair of walls are dovetailed and undercut.

4. The bin of any one of the preceding claims wherein the interlocking members extend along side edges of the first and second pair of walls.

5. The bin of any one of the preceding claims wherein the base includes at least one lip and at least one wall of the first and second pair of walls interlocks with the lip.

6. The bin of claim 5 wherein the lip extends inwardly from a periphery of the base.

7. The bin of claim 5 wherein the lip includes a horizontal portion, a curved portion, and a vertical portion.

8. The bin of claim 5 wherein the lip includes a slot and at least one of the first pair of walls includes a hook member for engaging the slot.

9. The bin of claim 5 wherein the lip includes a hooked portion and at least one of the second pair of walls includes a hinge member for engaging the hooked portion.

10. The bin of claim 9 wherein the hinge member includes a hinge pin spaced from an edge of at least one of the second pair of walls by a first arm and a second arm.

11. The bin of claim 9, wherein the base includes a plurality of vertical corrugations aligned with the hooked portion.

12. The bin of any one of the preceding claims wherein the wall interlocking members on at least one of the first pair of walls extends in a direction generally parallel to the first pair of walls.

13. The bin of any one of the preceding claims wherein the wall interlocking members on at least one of the second pair of walls extends in a direction generally perpendicular to the second pair of walls.

14. The bin of any one of the preceding claims wherein the at least one wall of the first of the first and second pair of walls is retained in interlocking engagement with the base by an adjacent wall, which prevents the at least one wall from moving away from the exterior of the bin.

15. The bin of claim 14 wherein one of the at least one wall and the adjacent wall includes a protrusion for engaging the other of the at least one wall and the adjacent wall to secure the at least one wall and the adjacent wall in interlocking engagement.

16. The bin of any one of the preceding claims wherein at least one of the first and second pair of walls includes a plurality of first hollow ribs alternating with parallel first channels on a first side of at least one of the first and second pairs of walls and a plurality of second alternating hollow ribs alternating with parallel second channels along an opposite side of the at least one wall, wherein the first hollow ribs and first channels are transverse to the second hollow ribs and second channels.

17. The bin of any one of the preceding claims wherein the base and the first and second pairs of walls are each roto-molded.

18. The bin of any one of the preceding claims wherein a plurality of cavities extend through the first pair of walls adjacent the interlocking members.

19. A method of assembling a bin including the steps of:
a) securing a first wall to a base by rotating the first wall toward an exterior of the base to interlock the first wall to the base;
b) securing a second wall to the base, opposite the first wall, by rotating the second wall toward an exterior of the base to interlock the second wall to the base; and
c) securing a third wall in an interlocking arrangement with the first wall, the second wall and the base, by rotating the third wall from a location within the base.

20. The method of claim 19 wherein the first wall includes a hinge member, the method further including the step of placing the hinge member adjacent at least one corrugation prior to securing the first wall to the base.
